# EUROPÄISCHE PATENTSCHRIFT

(11) **EP 4 184 456 B1**
(45) Veröffentlichungstag und Bekanntmachung des Hinweises auf die Patenterteilung: **22.10.2025**
(21) Anmeldenummer: 22209013.6
(22) Anmeldetag: 23.11.2022
(51) Int. Cl.: G06V 40/16, G06V 10/141

(54) **VERFAHREN UND VORRICHTUNG ZUM BESTIMMEN EINES DIGITALEN BIOMETRISCHEN PASSBILDS FÜR EIN SICHERHEITSDOKUMENT SOWIE VERFAHREN ZUM PERSONALISIEREN EINES SICHERHEITSDOKUMENTS**
METHOD AND DEVICE FOR DETERMINING A DIGITAL BIOMETRIC TEMPLATE FOR A SECURITY DOCUMENT AND METHOD FOR PERSONALIZING A SECURITY DOCUMENT
PROCÉDÉ ET DISPOSITIF DE DÉTERMINATION D'UNE IMAGE BIOMÉTRIQUE NUMÉRIQUE POUR UN DOCUMENT DE SÉCURITÉ ET PROCÉDÉ DE PERSONNALISATION D'UN DOCUMENT DE SÉCURITÉ

(30) Priorität: 23.11.2021 DE 102021130705
(43) Veröffentlichungstag der Anmeldung: 24.05.2023
(73) Patentinhaber: Bundesdruckerei GmbH, 10969 Berlin (DE)
(72) Erfinder: Peters, Dr. Florian, 10437 Berlin (DE); Sauer, Tatjana, 13189 Berlin (DE)
(74) Vertreter: Bittner, Thomas L.

(56) Entgegenhaltungen:
- EP-B1- 3 099 060
- WO-A1-94/26057
- CN-B- 104 956 377
- KR-A- 20090 132 839
- US-A1- 2013 215 275

## Beschreibung

Die Erfindung betrifft ein Verfahren und eine Vorrichtung zum Bestimmen von Passbilddaten, die ein digitales biometrisches Passbild für ein Sicherheitsdokument repräsentieren, aus Videobildaufnahmen sowie ein Verfahren zum Personalisieren eines Sicherheitsdokuments.

### Hintergrund

Es ist bekannt, Personen anhand von biometrischen Gesichtsmerkmalen zu identifizieren. Solche biometrischen Gesichtsmerkmale können in Verbindung mit Sicherheitsdokumenten wie beispielsweise Ausweisen oder Pässen aus biometrischen Passbildern auf dem Sicherheitsdokument abgeleitet werden. Mittels des biometrischen Passbildes ist das Sicherheitsdokument personalisiert und ermöglicht ein Identifizieren der Person, wahlweise in Verbindung mit weiteren Sicherheitselementen des Sicherheitsdokuments.

Zum Bestimmen von Passbilddaten, die ein digitales biometrisches Passbild einer Person repräsentieren, werden üblicherweise Einzelbildaufnahmen mittels einer Kameraeinrichtung für die Person erfasst. Wird nach einer erfolgten Bildaufnahme festgestellt, dass ein oder mehrere Prüfkriterien für die Eignung als biometrisches Passbild nicht erfüllt sind, können ein oder mehrere weitere Einzelbildaufnahmen folgen.

Das Dokument DE 20 2008 018 640 U1 offenbart ein Abbildungssystem zum Fotografieren eines Motivs. Das System umfasst: eine Vordergrundlichtquelle, angeordnet und konfiguriert, das Motiv zu beleuchten; eine Hintergrundlichtquelle, angeordnet und konfiguriert, einen Hintergrund zu beleuchten; eine digitale Kamera, eingerichtet, Stillleben-Fotos eines Motivs aufzunehmen, welches zwischen der digitalen Kamera und dem Hintergrund angeordnet ist; und eine Steuereinrichtung, eingerichtet: ein Leuchten der Hintergrundlichtquelle mit einer Aufnahme eines von der digitalen Kamera aufgenommenen hintergrundbeleuchteten Bildes zu synchronisieren; und ein Leuchten der Vordergrundlichtquelle mit einer Aufnahme eines von der digitalen Kamera aufgenommenen vordergrundbeleuchteten Bildes zu synchronisieren.

Die Veröffentlichungsschrift KR 20090132839 A offenbart Ein System und ein Verfahren zur Ausstellung eines elektronischen Personalausweises, um in einer Fotokabine ein Identifikationsfoto zu erhalten, das internationalen Standards entspricht. Dabei fotografiert ein Fotogerät das Identifikationsfoto des Benutzers. Ein Benutzerauthentifizierungsgerät bestätigt den Benutzer anhand seines Fingerabdrucks. Nachdem eine Kartenausgabeeinheit das Ausweisfoto erhalten hat, wird das empfangene Ausweisfoto im elektronischen Personalausweis aufgezeichnet. Ein Hauptserver empfängt und speichert das Identifikationsfoto.

Die Veröffentlichungsschrift US 2013/215275 A1 offenbart einen Registrierungskiosk zum Sammeln personenbezogener Daten. Der Kiosk umfasst eine Szenenkamera, die so konfiguriert ist, dass sie ein Video eines Bereichs rund um den Registrierungskiosk aufzeichnet und das Video an einen Fernbediener überträgt, der sich entfernt vom Registrierungskiosk befindet.

Die Veröffentlichungsschrift WO 94/26057 A1 offenbart ein Verfahren und eine Vorrichtung, bei der durch Differenzbeleuchtung zwei separate Bildsignale eines Motivs vor einem Hintergrund erhalten werden können, von denen eines einer Silhouette des Motivs entspricht und ein anderes ein normales Bildsignal des Motivs und des Hintergrunds ist. Differenzielle Beleuchtung wird erreicht, indem sichtbares Licht gefolgt von Infrarotlicht oder umgekehrt verwendet wird. Durch synchrones Umschalten des Videosignals, das Bildinhalte sowohl zum Motiv als auch zum Hintergrund enthält, kann letzterer aus dem Bildinhalt des Motivs entfernt werden, sodass der Hintergrund mit einem anderen Hintergrund überlagert werden kann.

### Zusammenfassung

Aufgabe der Erfindung ist es, ein Verfahren und eine Vorrichtung zum Bestimmen von Passbilddaten, die ein digitales biometrisches Passbild für ein Sicherheitsdokument repräsentieren, anzugeben, mit denen der Prozess des Erzeugens der Passbilddaten effizient und mit geminderter Fehleranfälligkeit ausgeführt werden kann. Darüber hinaus soll ein Verfahren zum Personalisieren eines Sicherheitsdokuments in diesem Zusammenhang verbessert werden.

Zur Lösung der Aufgabe sind ein Verfahren und eine Vorrichtung zum Bestimmen von Passbilddaten, die ein digitales biometrisches Passbild für ein Sicherheitsdokument repräsentieren, nach den unabhängigen Ansprüchen 1 und 14 geschaffen. Weiterhin ist ein Verfahren zum Personalisieren eines Sicherheitsdokuments nach dem nebengenordneten Anspruch 12 geschaffen. Ausgestaltungen sind Gegenstand von abhängigen Unteransprüchen.

Nach einem Aspekt ist ein Verfahren zum Bestimmen von Passbilddaten, die ein digitales biometrisches Passbild für ein Sicherheitsdokument (1) repräsentieren, mit:- Aufnehmen einer Folge von Portraitbildern für eine Person (4) mittels Videobildaufnahme mit einer Bildwiederholfrequenz mittels einer Videobildaufnahmevorrichtung (2), wobei die Person (4) hierbei mittels einer Beleuchtungseinrichtung (7) beleuchtet wird;- Speichern von jeweiligen Portraitbilddaten für die Portraitbilder aus der Videobildaufnahme und- Bestimmen von Passbilddaten, die ein digitales biometrisches Passbild der Person (4) repräsentieren, aufweisend:- Bestimmen eines ersten Portraitbilds aus der Folge von Portraitbildern, welches gemäß Aufnahmebedingungen aufgenommen wurde und mehreren Prüfkriterien für ein digitales biometrisches Passbild für ein Sicherheitsdokument (1) genügt, nicht aber hinsichtlich eines Hintergrund-Prüfkriteriums für das digitale biometrische Passbild;- Bestimmen einer Beleuchtungseigenschaft, welche mittels der Beleuchtungseinrichtung (7) beim Aufnehmen des ersten Portraitbilds angewendet wurde und mindestens eine Beleuchtungsstärke anzeigt;- Aufnehmen von weiteren Portraitbildern für die Person (4) mittels Videobildaufnahme mit Hilfe der Videobildaufnahmevorrichtung (2) sowie unter Verwendung der Beleuchtungseinrichtung (7) und Aufrechterhaltung der Aufnahmebedingungen, wobei die weiteren Portraitbilder- ein erstes weiteres Portraitbild, welches unter Verwendung der Beleuchtungsstärke aufgenommen wird,- ein zweites weiteres Portraitbild umfassen, welches unter Verwendung einer im Vergleich zur Beleuchtungsstärke geringeren Beleuchtungsstärke aufgenommen wird; und- ein drittes weiteres Portraitbild wird mit einer im Vergleich zur Beleuchtungsstärke größeren Beleuchtungsstärke aufgenommen;- Bestimmen eines geeigneten Portraitbilds aus den weiteren Portraitbildern, welches den mehreren Prüfkriterien und dem Hintergrund-Prüfkriterium für das digitale biometrische Passbild genügt; und- Erzeugen der Passbilddaten unter Verwendung von dem geeigneten Portraitbild zugeordneten Portraitbilddaten.

Nach einem weiteren Aspekt ist eine Vorrichtung zum Bestimmen von Passbilddaten, die ein digitales biometrisches Passbild für ein Sicherheitsdokument (1) repräsentieren, mit einer Passbildaufnahmeeinrichtung (3), die für Folgendes eingerichtet ist: - Aufnehmen einer Folge von Portraitbildern für eine Person (4) mittels Videobildaufnahme mit einer Bildwiederholfrequenz mittels einer Videobildaufnahmevorrichtung (2), wobei die Person (4) hierbei mittels einer Beleuchtungseinrichtung (7) beleuchtet wird; - Speichern von jeweiligen Portraitbilddaten für die Portraitbilder aus der Videobildaufnahme und - Bestimmen von Passbilddaten, die ein digitales biometrisches Passbild der Person (4) repräsentieren, aufweisend: - Bestimmen eines ersten Portraitbilds aus der Folge von Portraitbildern, welches gemäß Aufnahmebedingungen aufgenommen wurde und mehreren Prüfkriterien für ein digitales biometrisches Passbild für ein Sicherheitsdokument (1) genügt, nicht aber hinsichtlich eines Hintergrund-Prüfkriteriums für das digitale biometrische Passbild; - Bestimmen einer Beleuchtungseigenschaft, welche mittels der Beleuchtungseinrichtung (7) beim Aufnehmen des ersten Portraitbilds angewendet wurde und mindestens eine Beleuchtungsstärke anzeigt; - Aufnehmen von weiteren Portraitbildern für die Person (4) mittels Videobildaufnahme mit Hilfe der Videobildaufnahmevorrichtung (2) sowie unter Verwendung der Beleuchtungseinrichtung (7) und Aufrechterhaltung der Aufnahmebedingungen, wobei die weiteren Portraitbilder - ein erstes weiteres Portraitbild, welches unter Verwendung der Beleuchtungsstärke aufgenommen wird, - ein zweites weiteres Portraitbild umfassen, welches unter Verwendung einer im Vergleich zur Beleuchtungsstärke geringeren Beleuchtungsstärke aufgenommen wird; und - ein drittes weiteres Portraitbild wird mit einer im Vergleich zur Beleuchtungsstärke größeren Beleuchtungsstärke aufgenommen; - Bestimmen eines geeigneten Portraitbilds aus den weiteren Portraitbildern, welches den mehreren Prüfkriterien und dem Hintergrund-Prüfkriterium für das digitale biometrische Passbild genügt; und - Erzeugen der Passbilddaten unter Verwendung von dem geeigneten Portraitbild zugeordneten Portraitbilddaten..

Mit Hilfe der vorgeschlagenen Technologie ist es ermöglicht, die ein digitales biometrisches Passbild repräsentierenden (Pass-)Bilddaten aus den Videobildaufnahmen selbst zu bestimmen. Es bedarf also keiner (ergänzenden) Einzelbildaufnahme, wie dies im Stand der Technik bekannt ist, wo vorgesehen ist, der Person mittels Videobild vor der Einzelbildaufnahme Hinweise zu geben, zum Beispiel betreffend eine korrekte Kopfstellung und Ausrichtung, um dann mittels einer weiteren Kamera nacheinander Einzelbilder aufzunehmen, welche nachfolgend zur Passbilddatenbestimmung verarbeitet werden. Es sind somit ein Verfahren und eine Vorrichtung zum Bestimmen von Passbilddaten direkt aus Videobildaufnahmen geschaffen.

Im Rahmen der Videobildaufnahme wird eine Abfolge von Portrait- oder Gesichtsbildern mit der Bildwiederholfrequenz (des Videobildstroms) mit einer Aufnahmeauflösung erfasst. Die Portraitbilddaten, welche jeweils die aufgenommenen Portraitbilder der Person repräsentieren, werden in einer Speichereinrichtung abgelegt. Es kann vorgesehen sein, die Portraitbilddaten in einem gemeinsamen Speicher ("*shared memory"*) abzulegen, auf den mehrere Datenverarbeitungsprozesse gemeinsam und koordiniert zugreifen können.

Mittels der vorgeschlagenen Technologie ist es ermöglicht, die das digitale biometrische Passbild repräsentierenden (Pass-)Bilddaten aus den Videobildaufnahmen zu bestimmen, derart, dass das digitale biometrische Passbild, also insbesondere ein biometrisches Bild, welches zur Personenidentifikation geeignet ist, zum Beispiel auf einen ID-Dokument, mit einem dem Hintergrund-Prüfkriterium für solche Passbilder genügenden Hintergrund bestimmt wird, auch wenn bei den Videobildaufnahmen selbst kein Hintergrund erfasst wird, der dem Hintergrund-Prüfkriterium genügt. Es sind somit ein Verfahren und eine Vorrichtung zum Bestimmen von Passbilddaten aus Videobildaufnahmen bereitgestellt, wobei sichergestellt wird, dass das digitale biometrische Passbild dem für solche Passbilder notwendigen Hintergrund-Prüfkriterium genügt.

Die Videobildaufnahmen werden mittels einer Videobildaufnahmevorrichtung aufgenommen, die mit der Passbildaufnahmeeinrichtung bereitgestellt ist, und mittels einer Datenverarbeitungseinrichtung verarbeitet, um die Passbilddaten zu erzeugen. Die Datenverarbeitungseinrichtung kann Teil der Passbildaufnahmeeinrichtung oder zumindest teilweise getrennt hiervon gebildet sein. Im Rahmen der Videobildaufnahme werden Folgen von Portrait- oder Gesichtsbildern mit der Bildwiederholfrequenz (des Videobildstroms) erfasst. Aus der Folge von Portraitbildern wird ein erstes Portraitbild bestimmt, welches mehreren Prüfkriterien für das digitale biometrische Passbild für das Sicherheitsdokument genügt, nicht aber dem Hintergrund-Prüfkriterium. Das so bestimmte erste Portraitbild erfüllt somit die mehreren Prüfkriterien für das digitale biometrische Passbild, weist jedoch nicht den für ein solches digitales biometrisches Passbild notwendigen Hintergrund auf. Hierzu ist beispielsweise ein einfarbiger und heller (idealerweise neutral grauer) Hintergrund gefordert. Weiterhin soll der Hintergrund einen Kontrast zum Gesicht und zu den Haaren der Person aufweisen. Bei hellen Haaren eignet sich ein mittelgrauer Hintergrund, bei dunklen Haaren ein hellgrauer. Der Hintergrund soll darüber frei von Muster sein, bevorzugt auch frei von Schatten im Hintergrund.

Es ist sodann vorgesehen, weitere Portraitbilder für die Person mittels Videobildaufnahme aufzunehmen, um die hierbei erfassten weiteren Portraitbilder zu verarbeiten, so dass schließlich ein geeignetes Portraitbild bestimmt wird, welches zusätzlich dem Hintergrund-Prüfkriterium genügt und aus dem die (Pass-)Bilddaten für das digitale biometrische Passbilder zeugt werden können. Beim Aufnehmen der weiteren Portraitbilder kann die Beleuchtungsstärke größer und / oder geringer sein als die vorher bestimmte Beleuchtungsstärke.

Mit dem Verfahren ist es ermöglicht, mittels der Videobildaufnahme ein digitales biometrisches Passbild, welches für ein Sicherheitsdokument (zur Personenidentifikation) geeignet ist, zu erzeugen, auch wenn die Portraitbilder für die Person vor einem nicht geeigneten Hintergrund aufgenommen werden. Hierdurch entfällt zum Beispiel die Notwendigkeit, für die Videobildaufnahmen eine Hintergrundwand aufzustellen, um so für die Portraitbilder einen geeigneten Hintergrund bereitzustellen. Vielmehr können die Portraitbilder im Rahmen der Videobildaufnahme auch ohne eine solche Rückwand in unterschiedlichen Aufnahmeszenarien erfasst werden, um dann mittels der Hintergrundkorrektur das für das digitale biometrische Passbild geeignete (digitale) Portraitbild bereitzustellen.

Das Bestimmen der Passbilddaten kann in einer Ausführungsform mittels eines Datenverarbeitungsprozesses ausgeführt werden, der zumindest teilweise mittels eines FPGA-Bausteins implementiert ist, wobei der Datenverarbeitungsprozess auf das Speichermedium mit den Portraitbilddaten Zugriff hat. Diese Ausführungsform kann eine Parallelisierung von Datenverarbeitungsprozessen vorteilhaft unterstützen.

Das Aufnehmen der weiteren Portraitbilder weist ferner auf: das zweite weitere Portraitbild wird mit einer im Vergleich zur Beleuchtungsstärke geringeren Beleuchtungsstärke aufgenommen; und ein drittes weiteres Portraitbild wird mit einer im Vergleich zur Beleuchtungsstärke größeren Beleuchtungsstärke aufgenommen.

In den verschiedenen Ausführungsformen können die weiteren Portraitbilder bei Beleuchtungsstärken aufgenommen werden, die im Vergleich zur Beleuchtungsstärke nach der Beleuchtungseigenschaft größer und / oder kleiner sind. Beim Aufnehmen der weiteren Portraitbilder können die Beleuchtungsstärken, welche von der vorher bestimmten Beleuchtungsstärke verschieden sind, alternativ alle größer oder kleiner sein. Die Beleuchtungseigenschaft kann hierbei eine optimierte Beleuchtungsstärke angeben, die anhand der Analyse von mehreren der Portraitbilder aus der Folge von Portraitbildern bestimmt wurde.

Das Bestimmen des geeigneten Portraitbilds kann Folgendes aufweisen: Vorauswählen eines der weiteren Portraitbilder, wenn das eine der weiteren Portraitbilder den mehreren Prüfkriterien für das digitale biometrische Passbild genügt; und Ausführen einer Hintergrundkorrektur für das vorausgewählte Portraitbild unter Verwendung von aus den weiteren Portraitbildern bestimmter Bildinformation. Die Hintergrundkorrektur für das weitere Portraitbild wird nur dann ausgeführt, wenn zuvor bestimmt wurde, dass das weitere Portraitbild den mehreren Prüfkriterien für das digitale biometrische Passbild genügt. Anderenfalls können zum Beispiel zusätzliche weitere Portraitbilder den weiteren Portraitbildern entsprechend aufgenommen werden, um erneut die Prüfung auf das Erfüllen der mehreren Prüfkriterien für das digitale biometrische Passbild durchzuführen.

Die mehreren Prüfkriterien können für das digitale biometrische Passbild mindestens oder ausschließlich die Prüfkriterien nach der Foto-Mustertafel für Personaldokumente umfassen, ohne das Hintergrund-Prüfkriterium. Die Foto-Mustertafel für Personaldokumente ist beispielsweise abrufbar unter folgender Adresse:
https://www.bmi.bund.de/Shared Docs/downloads/DE/veroeffentlichungen/themen/moderneverwaltung/ausweise/fotomustertafel.html [abgerufen am 10. September 2021].

Die Foto-Mustertafel veranschaulicht die Anforderungen an digitale biometrische Passbilder von Erwachsenen und Kindern für einen Personalausweis und einen Reisepass. Zu den darin genannten Prüfkriterien gehören insbesondere die folgenden Prüfkriterien: Format, Schärfe und Kontrast, Ausleuchtung, Hintergrund, Fotoqualität, Kopfposition und Gesichtsausdruck, Augen- und Blickrichtung, Brillenträger und Kopfbedeckung. Hinsichtlich dieser Prüfkriterien sind in der Foto-Mustertafel Vorgaben definiert, die herangezogen werden können, um die Eignung eines Portraitbildes für das Bestimmen eines digitalen biometrischen Passbildes zu prüfen.

Die mehreren Prüfkriterien für das digitale biometrische Passbild können mindestens oder ausschließlich die Prüfkriterien nach ICAO-Standard für Passbilder umfassen, ohne das Hintergrund-Prüfkriterium. Bei dieser Ausführungsform ist vorgesehen, die Eignung eines Portraitbildes für ein digitales biometrisches Passbild anhand des ICAO-Standards für Passbilder für maschinenlesbare Sicherheitsdokumente zu prüfen: *"Technical Report - Portrait Quality (Reference Facial Images for MRTD)"* (Version 1.0 aus April 2018 oder aktuellere Fassung). Darin sind Standardkriterien definiert, die Portrait- oder Gesichtsbilddaten erfüllen müssen, um als digitales biometrisches Passbild für ein maschinenlesbares Sicherheitsdokument geeignet zu sein.

Beim Ausführen der Hintergrundkorrektur kann weiterhin Folgendes vorgesehen sein: Bestimmen eines Vordergrunds und eines Hintergrund in dem vorausgewählte Portraitbild unter Verwendung der aus den weiteren Portraitbildern bestimmten Bildinformation; und Ausführen der Hintergrundkorrektur für den Hintergrund im vorausgewählten Portraitbild.

Beim Bestimmen von Vordergrund und Hintergrund kann weiterhin Folgendes vorgesehen sein: Bestimmen eines Vergleichsbildes, bei dem Bildpunkte des Vergleichsbildes entweder einem Vordergrund oder einem Hintergrund zugeordnet werden, indem in einander zugeordneten Bildpunkten ein Bildpunktunterschied bestimmt und die Bildpunkte in Abhängigkeit von einem Schwellwert für den Bildpunktunterschied dem Vordergrund oder dem Hintergrund zugeordnet werden, wobei das Vergleichsbild unter Verwendung von wenigstens zwei der weiteren Portraitbilder bestimmt wird; Bestimmen von Vordergrund und Hintergrund für Bildpunkte im vorausgewählten Portraitbild und Herstellen eines dem Hintergrund-Prüfkriterium genügenden, korrigierten Hintergrunds für die dem Hintergrund zugeordneten Bildpunkte im vorausgewählten Portraitbild.

Unter Verwendung der weiteren Portraitbilder wird das Vergleichsbild erzeugt, in welchem jeder Bildpunkt entweder dem Vordergrund oder dem Hintergrund zugeordnet ist. Den Vordergrund bildet hierbei die Gesichts- oder Kopfabbildung der Person. Das Vergleichsbild bildet eine Art Maske, die auf das weitere zweite Portraitbild angewendet werden kann, um darin Vordergrund und Hintergrund zu bestimmen. Die dem Hintergrund zugeordneten Bildpunkte (Pixel) können dann korrigiert werden, um einen dem Hintergrund-Prüfkriterium genügenden Hintergrund zu erzeugen.

Das Bestimmen des Bildpunktunterschieds kann ein Bestimmen eines Helligkeits- und / oder Farbunterschieds für die einander zugeordneten Bildpunkte und ein Verwenden eines Helligkeits- und / oder Farbunterschieds-schwellwert umfassen. Beim Bestimmen des Vergleichsbilds wird hier zur Zuordnung der Bildpunkte zum Vordergrund oder zum Hintergrund ein Helligkeits- und / oder ein Farbunterschied für die miteinander zu vergleichenden Bildpunkte herangezogen. Anhand des Vergleichs mit dem Helligkeits- und / oder dem Farbunterschiedsschwellwert wird der Bildpunkt des Vergleichsbildes dem Vordergrund oder dem Hintergrund zugeordnet.

Beim Herstellen des korrigierten Hintergrunds kann weiterhin Folgendes vorgesehen sein: Ausbilden der Bildpunkte für den Hintergrund mit einer homogenen Farbgebung und / oder Blenden des Vordergrunds zum Hintergrund mittels Alpha-Blending.

Beim Aufnehmen der Folge von Portraitbildern und der weiteren Portraitbildern kann für die Person mittels der Beleuchtungseinrichtung eine getaktete Beleuchtung angewendet wird, wobei eine Taktung zur Bildwiederholfrequenz synchronisiert ist. Die Beleuchtungseinrichtung wird auf diese Weise zum Ausleuchten des Gesichts der Person in zeitlicher Hinsicht synchronisiert zu den Videobildaufnahmen ein- und ausgeschaltet.

Die Folge von Portraitbildern und / oder die weiteren Portraitbildern können in verschiedenen Ausführungsformen mit einer Bildwiederholfrequenz von wenigstens etwa 10 Bildern pro Sekunde aufgenommen werden. Alternativ kann vorgesehen sein, die Folge von Portraitbildern und / oder die Folge von weiteren Portraitbildern mit einer Bildwiederholfrequenz von höchstens etwa 30 Bildern pro Sekunde aufzunehmen, alternativ mit einer Bildwiederholfrequenz von höchstens etwa 60 Bildern pro Sekunde.

Die Passbilddaten können an eine Personalisierungseinrichtung übertragen werden, die eingerichtet ist, die Passbilddaten zu verarbeiten, derart, dass eine Repräsentation des digitalen biometrischen Passbildes auf einem Dokumentenkörper für ein Sicherheitsdokument aufgebracht wird.

Die vorangehend im Zusammenhang mit dem Verfahren zum Bestimmen von Passbilddaten für ein digitales biometrisches Passbild erläuterten Ausgestaltungen können im Zusammenhang mit der Vorrichtung zum Bestimmen von Passbilddaten und / oder dem Verfahren zum Personalisieren eines Sicherheitsdokuments entsprechend vorgesehen sein.

Beim Bestimmen des ersten Portraitbilds aus der Folge von Portraitbildern kann ein Verfahren mit den folgenden Schritten zum Einsatz kommen: Aufnehmen einer Folge von Portraitbildern für eine Person mittels Videobildaufnahme mit einer Bildwiederholfrequenz und einer Aufnahmeauflösung für die Portraitbilder mittels einer Videobildaufnahmevorrichtung; Speichern von jeweiligen Portraitbilddaten mit der Aufnahmeauflösung und Portraitbilddaten mit einer gegenüber der Aufnahmeauflösung verminderten Auflösung für die Portraitbilder aus der Videobildaufnahme; und Bestimmen von Passbilddaten, die ein digitales biometrisches Passbild der Person repräsentieren, aus den Portraitbildern der Videobildaufnahme. Das Bestimmen der Passbilddaten umfasst hierbei Folgendes: Auswählen von ersten Portraitbildern aus der Folge von Portraitbildern; Bestimmen, ob die Portraitbilddaten, welche den ersten Portraitbildern jeweils zugeordnet sind, ersten Prüfkriterien bezüglich einer Eignung für ein digitales biometrisches Passbild der Person erfüllen, wobei das Prüfen für die Portraitbilddaten mit der verminderten Auflösung ausgeführt wird; Auswählen eines der ersten Portraitbilder, für welches die zugeordneten Portraitbilddaten zumindest eine notwendige Teilmenge der ersten Prüfkriterien erfüllen; Bestimmen, ob die Portraitbilddaten, welche dem einen der ersten Portraitbilder zugeordnet sind, zweite Prüfkriterien bezüglich der Eignung für das digitale biometrische Passbild der Person erfüllen, wobei die zweiten Prüfkriterien von den ersten Prüfkriterien verschieden sind und das Prüfen für die Portraitbilddaten mit der verminderten Auflösung ausgeführt wird; und Erzeugen der Passbilddaten unter Verwendung der dem einen der ersten Portraitbilder zugeordneten Portraitbilddaten mit der Aufnahmeauflösung, wenn die Portraitbilddaten mit der verminderten Auflösung, welche dem einen der ersten Portraitbilder zugeordnet sind, zumindest eine notwendige Teilmenge der zweiten Prüfkriterien erfüllen.

Das Verfahren ermöglicht es, ein für die weitere Bearbeitung (insbesondere die anschließende Hintergrundbearbeitung) geeignetes digitales biometrisches Passbild aus den erfassten Videobildaufnahmen zu bestimmen.

Die Videobildaufnahmen werden mittels einer Videobildaufnahmevorrichtung aufgenommen und mittels einer Datenverarbeitungseinrichtung verarbeitet. Die Portraitbilddaten, welche jeweils die aufgenommene Portraitbilder der Person repräsentieren, werden bei diesem Ausführungsbeispiel mittels erster und zweiter Portraitbilddaten in der Speichereinrichtung abgelegt, wobei die ersten und die zweiten Portraitbilddaten das zugeordnete Porträtbild mit unterschiedlicher Auflösung repräsentieren, nämlich der ursprünglichen Aufnahmeauflösung (während der Videobildaufnahme) und einer hier gegenüber verminderten Auflösung. Alternativ können auch schon die ersten Portraitbilddaten mit einer gegenüber der Aufnahmeauflösung verminderten Auflösung gespeichert werden, wobei die zweiten Portraitbilddaten dann eine hiergegenüber (weiter) verminderte Bildauflösung aufweisen. Es kann vorgesehen sein, die Portraitbilddaten in dem gemeinsamen Speicher ("*shared memory*") abzulegen, auf den mehrere Datenverarbeitungsprozesse gemeinsam und koordiniert zugreifen können.

Die Portraitbilddaten mit der verminderten Auflösung werden analysiert oder verarbeitet, dahingehend, dass geprüft wird, ob die mehreren Prüfkriterien bezüglich einer Eignung für ein digitales biometrisches Passbild der Person erfüllt sind. Hierbei werden zum Beispiel jeweils mehrere erste und mehrere zweite Prüfkriterien untersucht. Sofern die Portraitdaten mit der verminderten Auflösung für eines der Portraitbilder sowohl mindestens eine Teilmenge der ersten wie auch mindestens eine Teilmenge der zweiten Prüfkriterien erfüllen, wird das erste Portraitbild bestimmt, welches dann hinsichtlich des Hintergrunds bearbeitet wird. Bei der Prüfung bezüglich der zweiten Prüfkriterien bleiben Portraitbilddaten unberücksichtigt, welche nicht zumindest die notwendige Teilmenge der ersten Prüfkriterien erfüllen.

Die notwendige Teilmenge der Prüfkriterien kann anwendungsabhängig festgelegt werden und bestimmt, dass nicht notwendigerweise alle jeweiligen Prüfkriterien von den untersuchten Portraitbilddaten erfüllt werden müssen, sondern nur eine Mindestanzahl. In alternativen Ausgestaltungen kann vorgesehen sein, dass - beim Bestimmen des ersten Portraitbilds - die Portraitbilddaten für die ersten Prüfkriterien und / oder die zweiten Prüfkriterien alle tatsächlich untersuchten Prüfkriterien erfüllen müssen, um als geeignet für das digitale biometrische Passbild bestimmt zu werden. Die notwendige Teilmenge von Prüfkriterien kann eine Mindestanzahl von Prüfkriterien angeben, die erfüllt sein müssen, wobei es hierbei nicht darauf ankommt, welche der Prüfkriterien erfüllt sind. Alternativ kann vorgesehen sein, dass die notwendige Teilmenge Prüfkriterien bestimmter Art festlegt, die notwendigerweise erfüllt sein müssen, um eine Eignung für das digitale biometrische Passbild festzustellen. Ist für die Prüfkriterien eine gewichtete Reihenfolge gegeben, kann vorgesehen sein, die Prüfkriterien der gewichteten Reihenfolge entsprechend nacheinander zu prüfen und die Prüfung abzubrechen, wenn die notwendige Teilmenge erfüllt ist, beispielsweise eine Mindestanzahl.

Das Aufnehmen der Folge von Portraitbildern für die Person mittels Videobildaufnahme und das Speichern von jeweiligen Portraitbilddaten mit der Aufnahmeauflösung und Portraitbilddaten mit der verminderten Auflösung für die Portraitbilder können während des Bestimmens der Passbilddaten zumindest zeitweise fortgesetzt werden. Hierbei wird der Prozess zum Aufnehmen und zum Abspeichern der Portraitbilder, die im Rahmen der Videobildaufnahme aufgenommen werden, fortgesetzt, während in Echtzeit parallel das Bestimmen der Passbilddaten aus bereits aufgenommenen Portraitbildern der Videobildaufnahme und nach Hintergrundkorrektur ausgeführt wird. Die Fortsetzung des Aufnehmens von Portraitbildern mittels Videobildaufnahme kann während der Bestimmung der Passbilddaten fortdauernd (durchgehend) oder unterbrochen erfolgen. Datenverarbeitungsprozesse zum Speichern der Portraitbilddaten und zum Bestimmen der Passbilddaten sind hierbei parallelisiert und können auf gleichen oder unterschiedlichen Datenverarbeitungskomponenten ausgeführt werden, beispielsweise einem FPGA-Baustein sowie einem oder mehreren Prozessoren.

Das Aufnehmen der Folge von Portraitbildern für die Person mittels Videobildaufnahme kann beendet werden, wenn die Passbilddaten erzeugt wurden. Wenn die Passbilddaten für die Person erzeugt sind, welche das digitale biometrische Passbild repräsentieren oder anzeigen, wird die Videobildaufnahme automatisch beendet, was als Reaktion auf ein entsprechendes Steuersignal an die Videobildaufnahmevorrichtung erfolgen kann. Bis zu diesem Zeitpunkt kann das Aufnehmen der Portraitbilder mittels Videobildaufnahme fortgesetzt werden.

Die Portraitbilder aus der Videobildaufnahme können in Echtzeit der Person als Videobildausgabe auf einer Anzeigeeinrichtung angezeigt werden, welche mit der Passbildaufnahmeeinrichtung verbunden ist. Bei dieser Ausführungsform werden die aufgenommenen Portraitbilder in Echtzeit parallel zum Aufnehmen auf der Anzeigeeinrichtung der Person und dargestellt, was dann zeitlich parallel zum Bestimmen der Passbilddaten erfolgt. Die Person erhält eine Art Rückkopplung über die Videobildaufnahmen und kann wahlweise selbständig Änderungen vornehmen, zum Beispiel bezüglich der Kopfposition oder der Blickrichtung.

Nach dem Erzeugen der Passbilddaten kann das digitale biometrische Passbild der Person auf der Anzeigeeinrichtung angezeigt werden. Bei dieser Ausführungsform ist vorgesehen, dass das digitale biometrische Passbild, welches die Passbilddaten anzeigen, der Person über die Anzeigeeinrichtung zur Kenntnis gebracht wird. Dieses kann zeitlich parallel zu der noch laufenden Videobildaufnahme und deren Ausgabe über die Anzeigeeinrichtung ausgeführt werden. Auf der Anzeigeeinrichtung kann ein separiertes Anzeigefenster genutzt werden, um das biometrische Passbild der Person zur Kenntnis zu bringen. Es kann vorgesehen sein, nach dem Anzeigen des digitalen biometrischen Passbilds auf der Anzeigeeinrichtung eine Benutzereingabe der Person in der Passbildaufnahmeeinrichtung zu empfangen, welche eine Zustimmung der Person zu dem biometrischen Passbild anzeigt. Hierauf kann die noch laufende Videobildaufnahme beendet werden. Auch kann als Reaktion auf die Benutzereingabe die weitere Be- oder Verarbeitung der Passbilddaten begonnen werden.

Die Passbilddaten können an eine Personalisierungseinrichtung übertragen werden, die eingerichtet ist, die Passbilddaten zu verarbeiten, derart, dass eine Repräsentation des digitalen biometrischen Passbildes auf einem Dokumentenkörper für ein Sicherheitsdokument aufgebracht wird. Die Passbilddaten können in Form einer Passbilddatendatei an die Personalisierungseinrichtung übertragen werden. Das Übertragen der Passbilddaten an die Personalisierungseinrichtung kann nach dem Erzeugen der Passbilddaten erfolgen. Alternativ kann vorgesehen sein, dass das Übertragen der Passbilddaten an die Personalisierungseinrichtung erst ausgeführt wird, nachdem eine Benutzereingabe betreffend die Zustimmung der Person zu dem biometrischen Passbild empfangen wurde. Die Personalisierungseinrichtung dient dem Personalisieren des Sicherheitsdokuments, indem hierauf eine Repräsentation des digitalen biometrischen Passbilds aufgebracht wird, beispielsweise mittels Aufdrucken des Passbilds und / oder Speichern der Passbilddaten in einem Speicherelement des Sicherheitsdokuments.

Weiterhin kann bei dem Verfahren zum Bestimmen des ersten Portraitbilds Folgendes vorgesehen sein: Auswählen von zweiten Portraitbildern aus der Folge von Portraitbildern, die von den ersten Portraitbildern verschieden sind, wenn für keines der ersten Portraitbilder festgestellt wird, dass die zugeordneten Portraitbilddaten die notwendige Teilmenge der ersten und die notwendige Teilmenge der zweiten Prüfkriterien erfüllt sind; Bestimmen der den zweiten Portraitbildern zugeordneten Portraitbilddaten entsprechend dem Bestimmen der den ersten Portraitbildern zugeordneten Portraitbilddaten; und Erzeugen der Passbilddaten unter Verwendung von Portraitbilddaten, welche einem der zweiten Portraitbilder zugeordnet sind, wenn die Portraitbilddaten zumindest die notwendige Teilmenge der ersten Prüfkriterien und zumindest die notwendige Teilmenge der zweiten Prüfkriterien erfüllen. Hierbei werden aus dem fortdauernden Videodatenbildstrom weitere Portraitbilder ausgewählt, wenn keines der ersten Portraitbilder die notwendigen Prüfkriterien bezüglich der Eignung für das digitale biometrische Passbild erfüllt. Dieser Prozess kann mehrfach mittels Auswahl weiterer Portraitbilder wiederholt werden, bis mindestens eines der Portraitbilder die notwendigen Prüfkriterien für die Eignung als digitales biometrisches Passbild erfüllt. Zeitlich parallel zum (laufenden) Aufnehmen der Folge von Portraitbildern mittels Videobildaufnahme werden bereits erfasste Portraitbilder hinsichtlich ihrer Eignung für das digitale biometrische Passbild geprüft. Wenn für zumindest eines der Portraitbilder die zugeordneten Portraitbilddaten die geforderten Prüfkriterien erfüllen, können hieraus die Passbilddaten bestimmt werden.

Die ersten Prüfkriterien können ein oder mehrere der folgenden Prüfkriterien umfassen: Ausleuchtung des Portraitbildes, Hintergrund des Portraitbildes, Bildkontrast, Kopfposition, Augen und Blickrichtung, Kopfbedeckung und Sitz einer Brille. Die ersten Prüfkriterien erlauben das Prüfen der Portraitbilddaten hinsichtlich ihrer biometrischen Eignung, also der Eignung, für das durch die Portraitbilddaten repräsentierte Passbild eine biometrische Gesichtserkennung auszuführen. Beispielsweise kann eine solche Eignung für die biometrische Gesichtserkennung festgestellt werden, wenn mindestens folgende erste Prüfkriterien erfüllt sind: frontale Bildaufnahme, festgelegte Kopfposition im Portraitbild, strukturloser Hintergrund, neutraler Gesichtsausdruck und ausreichende Ausleuchtung (ohne Reflexionen oder Schatten auf Gesicht und Hintergrund).

Aus den ersten Portraitbildern kann ein nicht geeignetes Portraitbild bestimmt werden, für welches die zugeordneten Portraitbilddaten die notwendige Teilmenge der ersten Prüfkriterien nicht erfüllen, wobei hierauf wenigstens einer der folgenden Schritte vorgesehen ist: (i) Erzeugen von Steuerdaten als Reaktion auf das Feststellen eines Fehlers, dahingehend, dass bei dem nicht geeigneten Portraitbild eines der ersten Prüfkriterien nicht erfüllt ist, wobei die Steuerdaten eingerichtet sind, eine Ausgabe über eine Ausgabeeinrichtung an die Person zu steuern, und wobei mit der Ausgabe ein Benutzerhinweis zum Beheben des Fehlers an die Person ausgegeben wird; und (ii) Erzeugen von weiteren Steuerdaten als Reaktion auf das Feststellen eines weiteren Fehlers, dahingehend, dass bei dem nicht geeigneten Portraitbild ein weiteres der ersten Prüfkriterien nicht erfüllt ist, wobei die weiteren Steuerdaten eingerichtet sind, einen Betriebsparameter der Videobildaufnahmevorrichtung und / oder einer der Videobildaufnahmevorrichtung zugeordneten Beleuchtungseinrichtung für das Aufnehmen der Folge von Portraitbildern zu ändern. Ein Fehler kann beispielsweise erkannt werden, wenn die Person in dem untersuchten Portraitbild eine Kopfbedeckung trägt, die Augen geschlossen sind, die Blickrichtung nicht nach vorn ausgerichtet ist und / oder Haare ein Auge bedecken. Die auf das Erkennen eines solchen Fehlers erzeugten Steuerdaten sind eingerichtet, einen Benutzerhinweis an die Person auszugeben, sei es in visueller und / oder akustischer Form, um die Person zur Korrektur des Fehlers aufzufordern. Die weiteren Steuerdaten auf das Feststellen des weiteren Fehlers können zum Beispiel eine geänderte Kameraeinstellung für die Videobildaufnahmevorrichtung und / oder eine geänderte Einstellung der Beleuchtungseinrichtung zum besseren Ausleuchten betreffen. Eine intuitive Benutzerführung mittels der Steuerdaten kann vorgesehen sein, beispielsweise das Ausgeben von Benutzerhinweisen über eine Anzeigeeinrichtung, die die Person beispielsweise veranlassen die Blickrichtung zu ändern.

Mittels der zweiten Prüfkriterien kann geprüft werden, ob die Portraitbilddaten ein digitales biometrisches Passbild repräsentieren, welches dem ICAO-Standard für Passbilder für maschinenlesbare Sicherheitsdokumente genügt. Beispielsweise kann mittels der zweiten Prüfkriterien geprüft werden, ob die Portraitbilddaten folgendem Standard genügen: *"Technical Report - Portrait Quality (Reference Facial Images for MRTD)"* (Version 1.0 aus April 2018 oder aktuellere Fassung).

### Beschreibung von Ausführungsbeispielen

Nachfolgend werden weitere Ausführungsbeispiele unter Bezugnahme auf Figuren einer Zeichnung näher erläutert. Hierbei zeigen:
- Fig. 1: eine schematische Darstellung einer Anordnung für eine Vorrichtung zum Bestimmen von digitalen Passbilddaten, welche wahlweise mit einer Personalisierungseinrichtung verbunden ist; und
- Fig. 2: eine schematische Blockdarstellung für ein Verfahren zum Bestimmen von Passbilddaten, die ein digitales biometrisches Passbild für ein Sicherheitsdokument repräsentieren.

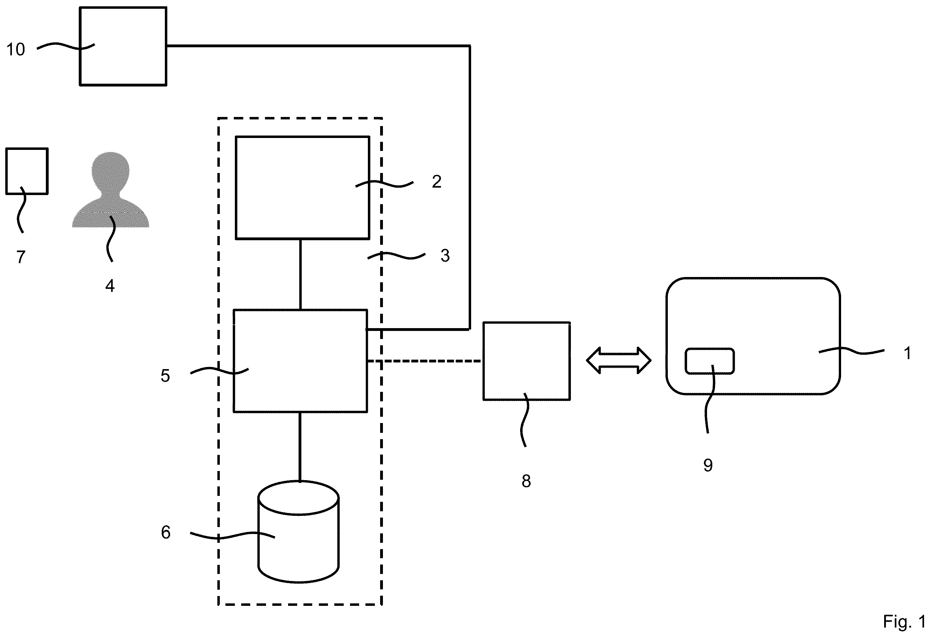

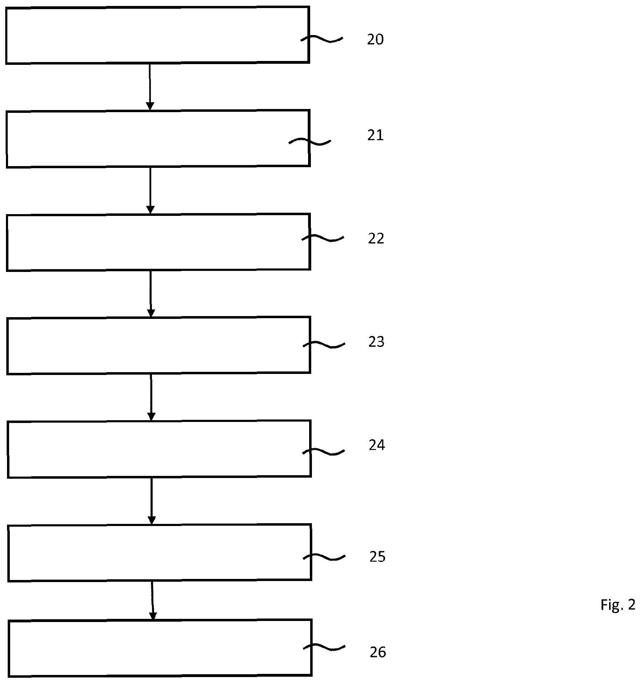

Fig. 1 zeigt eine schematische Darstellung einer Anordnung für eine Vorrichtung zum Bestimmen von Passbilddaten, die ein digitales biometrisches Passbild für ein Sicherheitsdokument 1 repräsentieren. Fig. 2 zeigt eine schematische Blockdarstellung für ein Verfahren zum Bestimmen der Passbilddaten, wobei hierbei eine Hintergrundbearbeitung ausgeführt wird.

Mit Hilfe einer Videobildaufnahmevorrichtung 2, die zum Beispiel mit einer Videobildkamera gebildet und im gezeigten Beispiel als Teil einer Passbildaufnahmeeinrichtung 3 bereitgestellt ist, werden im Schritt 20 für eine Person 4 Portrait- oder Gesichtsbilder im Rahmen einer Videobildaufnahme aufgenommen. Mit Hilfe einer Datenverarbeitungseinrichtung 5, die mit der Videobildaufnahmevorrichtung 2 verbunden ist, werden die in dem Videodatenstrom mit einer Bildwiederholfrequenz enthaltenen Portraitbilder in einer Speichereinrichtung 6 als digitale Portraitbilddaten abgelegt (Schritt 21). Hierbei werden Portraitbilddaten mit einer Aufnahmeauflösung gespeichert, welche der Bildauflösung beim Aufnehmen der Portraitbilder im Rahmen der Videobildaufnahme entspricht. Zusätzlich können in einem Ausführungsbeispiel für die Portraitbilder jeweils Portraitbilddaten mit einer gegenüber der Aufnahmeauflösung verminderten Auflösung in der Speichereinrichtung abgelegt werden.

Beim Aufnehmen der Portrait- oder Gesichtsbilder wird das Gesicht der Person 4 mittels einer Beleuchtungseinrichtung 7 beleuchtet, die getaktet und synchronisiert zur Videobildaufnahmevorrichtung 2 betreibbar ist.

Im Schritt 22 wird im Rahmen einer Vorprüfung aus der Folge von Portraitbildern mindestens ein erstes Portraitbild bestimmt, welches mehreren Prüfkriterien für ein digitales biometrisches Passbild für ein Sicherheitsdokument genügt, nicht aber hinsichtlich eines Hintergrund-Prüfkriteriums für das digitale biometrische Passbild. Es wird also mindestens eines der Portraitbilder bestimmt, welches den mehreren Prüfkriterien genügt. Das kann auf verschiedene Weise erfolgen.

Nachfolgend werden für das Bestimmen des erstes Portraitbilds Ausführungsbeispiele erläutert. Aus der Folge von Portraitbildern werden erste Portraitbilddaten ausgewählt. Für die den ersten Portraitbildern jeweils zugeordneten Portraitbilddaten wird bestimmt, ob diese erste Prüfkriterien bezüglich einer Eignung für das digitale biometrische Passbild der Person 4 erfüllen. Diese Prüfung wird für die Portraitbilddaten mit der verminderten Auflösung ausgeführt. Die ersten Prüfkriterien können zum Beispiel Prüfkriterien aus der folgenden Gruppe umfassen: Ausleuchtung des Portraitbildes, Hintergrund des Portraitbildes, Bildkontrast, Kopfposition, Augen und Blickrichtung, Kopfbedeckung und Sitz einer Brille.

Wird für die Portraitbilddaten zumindest eines der ersten Portraitbilder festgestellt, dass eine vorgegebene Menge von ersten Prüfkriterien erfüllt ist, wird das eine der ersten Portraitbilder für eine weitere Prüfung hinsichtlich der Eignung für das digitale biometrische Passbild ausgewählt. Im Rahmen der weiteren Prüfung werden für die Portraitbilddaten des ausgewählten Portraitbilds zweite Prüfkriterien geprüft, die von den ersten Prüfkriterien verschieden sind. Auch die Prüfung hinsichtlich der zweiten Prüfkriterien wird für die Portraitbilddaten mit der verminderten Auflösung ausgeführt. Die zweiten Prüfkriterien können einer Prüfung dienen, ob die Portraitbilddaten ein digitales biometrisches Passbild in Übereinstimmung mit dem ICAO-Standard für Passbilder für maschinenlesbare Sicherheitsdokumente sind. Beispielsweise kann der Standard gemäß *"Technical Report - Portrait Quality (Reference Facial Images for MRTD)"* in der Version 1.0 aus April 2018 oder einer aktuelleren Fassung ausgeführt werden. Alternativ können die Prüfkriterien aus der Foto-Mustertafel für Personaldokumente herangezogen werden, welche beispielsweise unter folgender Adresse abrufbar ist: https://www.bmi.bund.de/SharedDocs/downloads/DE/veroeffentlichungen/themen/moderneverwaltung/ausweise/fotomustertafel.html [abgerufen am 10. September 2021]. Die Foto-Mustertafel veranschaulicht die Anforderungen an digitale biometrische Passbilder von Erwachsenen und Kindern für einen Personalausweis und einen Reisepass. Zu den darin genannten Prüfkriterien gehören insbesondere die folgenden Prüfkriterien: Format, Schärfe und Kontrast, Ausleuchtung, Hintergrund, Fotoqualität, Kopfposition und Gesichtsausdruck, Augen- und Blickrichtung, Brillenträger und Kopfbedeckung. Hinsichtlich dieser Prüfkriterien sind in der Foto-Mustertafel Vorgaben definiert, die herangezogen werden können, um die Eignung eines Portraitbildes für das Bestimmen eines digitalen biometrischen Passbildes zu prüfen.

Wird festgestellt, dass die untersuchten Portraitbilddaten auch für die zweiten Prüfkriterien zumindest eine notwendige Teilmenge hiervon erfüllen (nicht jedoch das Hintergrund-Prüfkriterium), wird das zugeordnete Portraitbild als erstes Portraitbild ausgewählt, für welches dann im weiteren Verfahren der Hintergrund bearbeitet wird.

Im Vergleich zu dem vorangehend beschriebenen Ausführungsbeispiel kann vereinfachend auch vorgesehen sein, zum Beispiel (nur) die Portraitbilddaten mit der Aufnahmeauflösung zum Bestimmen des ersten Portraitbilds heranzuziehen und hierfür zu prüfen, ob zumindest eines der Portraitbilder den mehreren Prüfkriterien für ein digitales biometrisches Passbild für ein Sicherheitsdokumentgenügt, nicht aber hinsichtlich eines Hintergrund-Prüfkriteriums für das digitale biometrische Passbild.

Für das erste Portraitbild wurde bestimmt, dass es hinsichtlich des Hintergrund-Prüfkriteriums für das digitale biometrische Passbild nicht den Anforderungen genügt, also der Hintergrund der ersten Portraitbildaufnahme insbesondere nicht einfarbig und hell ist und / oder Schatten im Hintergrund vorhanden sind. Sollte das Hintergrund-Prüfkriterium an dieser Stelle nicht explizit geprüft werden, kann alternativ für das Verfahren angenommen werden, dass das Hintergrund-Prüfkriterium für das erste Portraitbild nicht erfüllt ist. Demgegenüber wird stets bestimmt, ob das erste Portraitbild den mehreren Prüfkriterien genügt.

Im Schritt 23 wird eine Beleuchtungseigenschaft bestimmt, welche mittels der Beleuchtungseinrichtung 7 beim Aufnehmen des ersten Portraitbilds angewendet wurde. Die Beleuchtungseigenschaft zeigt insbesondere eine Beleuchtungsstärke an, die zur Ausleuchtung des Gesichts der Person 4 bei der Videobildaufnahme für das erste Portraitbild verwendet wurde. Da das erste Portraitbild den mehreren Prüfkriterien für das digitale biometrische Passbild für das Sicherheitsdokument 1 genügt (nicht aber dem Hintergrund-Prüfkriterium), kann hier davon ausgegangen werden, dass die Beleuchtungseigenschaft, welche angewendet wurde, eine geeignete Beleuchtungseigenschaft ist, insbesondere eine geeignete oder optimierte Beleuchtungsstärke.

Um die Passbilddaten für das digitale biometrische Passbild zu bestimmen, ist es notwendig, ein Portraitbild zu bestimmen, welches zusätzlich auch dem Hintergrund-Prüfkriterium genügt. Hierzu ist dann im Schritt 24 vorgesehen, mittels Videobildaufnahme mit Hilfe der Videobildaufnahmevorrichtung 2 eine Folge von weiteren Portraitbildern für die Person aufzunehmen, wobei die Person 4 hierbei mittels der Beleuchtungseinrichtung 7 beleuchtet wird. Die weiteren Portraitbilder umfassen mindestens ein erstes weiteres Portraitbild, welches unter Verwendung der Beleuchtungsstärke aufgenommen wird, und ein zweites weiteres Portraitbild umfassen, welches unter Verwendung einer im Vergleich zur Beleuchtungsstärke (nach den Beleuchtungseigenschaften) veränderten Beleuchtungsstärke aufgenommen wird.

Beim Aufnehmen der weiteren Portraitbilder als Videobildaufnahmen werden Aufnahmebedingungen aufrechterhalten, die den Aufnahmebedingungen beim Aufnehmen des (mindestens einen) ersten Portraitbilds entsprechen, also zum Beispiel der Abstand der Person zur Videobildaufnahmevorrichtung 2 und die Pose des Kopfes der Person.

Gemäß der beanspruchten Erfindung werden mindestens die folgenden weiteren Portraitbilder aufgenommen: (i) ein erstes weiteres Portraitbild, bei dem eine im Vergleich zur Beleuchtungsstärke nach der Beleuchtungseigenschaft geringere Beleuchtungsstärke angewendet wird; (ii) mindestens ein zweites weiteres zweites Portraitbild, bei dem die Beleuchtungsstärke nach der Beleuchtungseigenschaft angewendet wird, und (iii) mindestens ein drittes weiteres drittes Portraitbild aufgenommen werden, bei dem eine im Vergleich zur geringeren Beleuchtungsstärke größere Beleuchtungsstärke angewendet wird. Hierbei wird also die Beleuchtungsstärke, die bei dem (zuvor bestimmten) ersten Portraitbild im Rahmen der Folge von weiteren Portraitbildern angewendet wurde, variiert, so dass die weiteren Portraitbilder mit unterschiedlichen Beleuchtungsstärken aufgenommen werden. Alternativ kann vorgesehen sein, mehrere weitere Portraitbilder aufzunehmen, für welche die Beleuchtungsstärke nur vermindert oder nur vergrößert wurde.

Ausgehend von den weiteren Portraitbildern wird im Schritt 25 ein geeignetes Portraitbild aus der Folge von weiteren Portraitbildern bestimmt, welches nicht nur den mehreren Prüfkriterien, sondern - nach wahlweise ausgeführter Hintergrundbearbeitung - auch dem Hintergrund-Prüfkriterium für das digital biometrisches Passbild genügt. Hierbei kann für ein aus den weiteren Portraitbildern vorausgewähltes Portraitbild eine Hintergrundkorrektur ausgeführt werden, die nachfolgend anhand von Ausführungsbeispielen näher erläutert wird. Die Vorauswahl kann hierbei vorsehen, aus den weiteren Portraitbildern eines auszuwählen, welches zumindest den mehreren Prüfkriterien für ein digitales biometrisches Passbild für ein Sicherheitsdokument genügt. Unter Verwendung zumindest eines Teils der weiteren Portraitbilder wird eine Bestimmung von Vordergrund und Hintergrund ausgeführt, worauf für das vorausgewählte Portraitbild eine Hintergrundkorrektur ausgeführt werden kann.

Hierbei kann Folgendes vorgesehen sein: Bestimmen eines Vergleichsbildes, bei dem Bildpunkte des Vergleichsbildes entweder einem Vordergrund oder einem Hintergrund zugeordnet werden, indem in einander zugeordneten Bildpunkten ein Bildpunktunterschied bestimmt und die Bildpunkte in Abhängigkeit von einem Schwellwert für den Bildpunktunterschied dem Vordergrund oder dem Hintergrund zugeordnet werden, wobei das Vergleichsbild unter Verwendung von wenigstens zwei der folgenden Portraitbilder bestimmt wird: (i) weiteres erstes Portraitbild, (ii) weiteres zweites Portraitbild und (iii) weiteres drittes Portraitbild; Bestimmen von Vordergrund und Hintergrund für Bildpunkte im weiteren zweiten Portraitbild und Herstellen eines dem Hintergrund-Prüfkriterium genügenden, korrigierten Hintergrunds für die dem Hintergrund zugeordneten Bildpunkte im weiteren zweiten Portraitbild. Beim Bestimmen des Bildpunktunterschieds kann ein Helligkeits- und / oder Farbunterschied für die einander zugeordneten Bildpunkte bestimmt werden, und ein Helligkeits- und / oder Farbunterschiedsschwellwert kann verwendet werden, um die Bildpunkte Vorder- oder Hintergrund zuzuordnen.

Beim Bestimmen des Vergleichsbilds können Bildpunkte, die sich bei Vergleich der Portraitbilder aufgrund der unterschiedlichen Beleuchtungsverhältnisse beim Aufnehmen der Videobilder wesentlich (zum Beispiel um ein Mindestmaß oder über den Schwellwert) verändert haben, dem Vordergrund zugeordnet werden. Bildpunkte, für die der Bildpunktunterschied geringer als der Schwellwert ist, werden dem Hintergrund zugeordnet. Das Vergleichsbild weist dann Bildpunkte auf die (temporär) entweder dem Vordergrund oder dem Hintergrund zugeordnet sind.

Alternativ kann das Bild, welches für die Bildpunkte den jeweiligen Bildpunktunterschied anzeigt, bildzeilenweise wie folgt verarbeitet werden: beginnend mit Zeile 1, Bestimmen eines ersten Pixels (Bildpunkt) von links, das temporär dem Vordergrund zugeordnet ist; Bestimmen ein letztes Pixel in der ersten Zeile, das temporär dem Vordergrund zugeordnet ist; Bestimmen einer inneren Zone zwischen dem ersten und dem letzten Pixel als Vordergrund und einer Zone außerhalb der inneren Zone als Hintergrund; und Fortsetzen der Bestimmung für alle Bildzeilen.

Es kann eine Filterung vorgesehen sein, zum Beispiel eine sogenannte "2D moving average" Filterung, so dass einzelne (temporäre) Vordergrund- und / oder Hintergrund-Bildpunkte nicht vorkommen im Vergleichsbild.

Optional kann vorgesehen sein, den Hintergrund einer homogenen Farbe entsprechend auszugestalten, ähnlich einer physischen Rückwand, und / oder Vordergrund zu Hintergrund zu blenden, zum Beispiel mittels sogenanntem Alpha-Blending.

Die Passbilddaten können dann im Schritt 26 wahlweise an eine Personalisierungseinrichtung 8 übertragen werden, welche eingerichtet ist, das Sicherheitsdokument 1 zu personalisieren. Hierzu kann die Personalisierungseinrichtung 8 mit einer Druckeinrichtung ausgeführt sein, mittels der das biometrische Passbild auf dem Sicherheitsdokument 1 aufgedruckt wird. Alternativ oder ergänzend kann vorgesehen sein, die Passbilddaten in einer Speichereinrichtung 9 des Sicherheitsdokuments 1 abzulegen. Hierdurch ist das Sicherheitsdokument personalisiert und ermöglicht anhand des biometrischen Passbildes eine Personenidentifizierung.

Während das Bestimmen der Passbilddaten des digitalen biometrischen Passbilds ausgeführt wird, kann das Aufnehmen der Portraitbilder mittels Videoaufnahme fortgeführt werden, so dass fortdauernd neue Portraitbilddaten bereitgestellt werden, auf die beim Bestimmen der Passbilddaten zurückgegriffen werden kann, bis zumindest für eines der Portraitbilder aus der Videobildaufnahme bestimmt wird, dass sowohl den mehreren Prüfkriterien als auch dem Hintergrund-Prüfkriterium bezüglich der Eignung für das digitale biometrische Passbild erfüllt sind. Auf das Erzeugen der Passbilddaten wird die Videobildaufnahme dann beendet.

Wird beim Prüfen der Portraitbilddaten hinsichtlich der mehreren Prüfkriterien ein Fehler festgestellt, welcher die Nichterfüllung zumindest eines der Prüfkriterien anzeigt, können hierauf in der Passbildaufnahmeeinrichtung 3 Steuerdaten erzeugt werden, um das weitere Aufnehmen von Portraitbildern mittels Videoaufnahme zu beeinflussen, dahingehend, dass verbesserte Portraitbilder aufgenommen werden. In einer Ausgestaltung kann vorgesehen sein, dass die Steuerdaten eingerichtet sind, eine Ausgabe über eine Ausgabeeinrichtung 10 an die Person 4 zu steuern, derart, dass ein Benutzerhinweis zum Beheben des Fehlers an die Person 4 ausgegeben wird, was einen visuellen und / oder akustischen Hinweis an die Person umfassen kann, beispielsweise eine Aufforderung, eine Kopfbedeckung abzunehmen, und / oder eine Aufforderung beide Augen zu öffnen. Ähnliche Benutzerhinweise können eine Korrektur der Blickrichtung oder das Verdecken eines Auges durch Haare im Gesicht der Person 4 betreffen. Die Ausgabeeinrichtung 10, welche zum Beispiel mit einem Display gebildet sein kann, kann wahlweise in die Passbildaufnahmeeinrichtung 3 integriert sein, zum Beispiel bei der Ausbildung in einem Terminalgerät zum Erfassen von personenbezogenen Daten für das Sicherheitsdokument 1. Die Ausgabeeinrichtung 9 kann zum Empfangen von Benutzereingaben als Ein- / Ausgabeeinrichtung ausgeführt sein.

Alternativ oder ergänzend können als Reaktion auf das Feststellen eines Fehlers Steuerdaten erzeugt werden, die eingerichtet sind, einen Betriebsparameter der Videobildaufnahmevorrichtung 2 und / oder einer dieser zugeordneten Beleuchtungseinrichtung für weitere Portraitbilder im Rahmen der Videobildaufnahme zu verbessern, beispielsweise für eine verbesserte Ausleuchtung der Portraitbilder.

Auf diese Weise werden die bei der Videobildaufnahme mit der Bildwiederholfrequenz erfassten Portraitbilder in Echtzeit als Reaktion auf das Feststellen eines Fehlers optimiert. Derartige Optimierungsprozesse können ausgeführt werden, bis für wenigstens eines der Portraitbilder festgestellt wird, dass sowohl die ersten wie auch die zweiten Prüfkriterien erfüllt sind, so dass die Passbilddaten erzeugt werden können. Auf das Feststellen von Fehlern im Rahmen der Prüfung der ersten Prüfkriterien wird auf den Prozess des Aufnehmens der Portraitbilder mittels Videoaufnahme rückgekoppelt, um schließlich für das digitale biometrische Passbild geeignete Portraitbilddaten mittels Videoaufnahme bereitzustellen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Sicherheitsdokument
- 2: Videobildaufnahmevorrichtung
- 3: Passbildaufnahmeeinrichtung
- 4: Person
- 5: Datenverarbeitungseinrichtung
- 6: Speichereinrichtung
- 7: Beleuchtungseinrichtung
- 8: Personalisierungseinrichtung
- 9: Speichereinrichtung des Sicherheitsdokument 1
- 10: Ausgabeeinrichtung
- 20, .., 26: Verfahrensschritte

## Patentansprüche

1. Verfahren zum Bestimmen von Passbilddaten, die ein digitales biometrisches Passbild für ein Sicherheitsdokument (1) repräsentieren, mit:
- Aufnehmen einer Folge von Portraitbildern für eine Person (4) mittels Videobildaufnahme mit einer Bildwiederholfrequenz mittels einer Videobildaufnahmevorrichtung (2), wobei die Person (4) hierbei mittels einer Beleuchtungseinrichtung (7) beleuchtet wird;
- Speichern von jeweiligen Portraitbilddaten für die Portraitbilder aus der Videobildaufnahme und
- Bestimmen von Passbilddaten, die ein digitales biometrisches Passbild der Person (4) repräsentieren, aufweisend:
- Bestimmen eines ersten Portraitbilds aus der Folge von Portraitbildern, welches gemäß Aufnahmebedingungen aufgenommen wurde und mehreren Prüfkriterien für ein digitales biometrisches Passbild für ein Sicherheitsdokument (1) genügt, nicht aber hinsichtlich eines Hintergrund-Prüfkriteriums für das digitale biometrische Passbild;
- Bestimmen einer Beleuchtungseigenschaft, welche mittels der Beleuchtungseinrichtung (7) beim Aufnehmen des ersten Portraitbilds angewendet wurde und mindestens eine Beleuchtungsstärke anzeigt;
- Aufnehmen von weiteren Portraitbildern für die Person (4) mittels Videobildaufnahme mit Hilfe der Videobildaufnahmevorrichtung (2) sowie unter Verwendung der Beleuchtungseinrichtung (7) und Aufrechterhaltung der Aufnahmebedingungen, wobei die weiteren Portraitbilder
- ein erstes weiteres Portraitbild, welches unter Verwendung der Beleuchtungsstärke aufgenommen wird,
- ein zweites weiteres Portraitbild umfassen, welches unter Verwendung einer im Vergleich zur Beleuchtungsstärke geringeren Beleuchtungsstärke aufgenommen wird; und
- ein drittes weiteres Portraitbild wird mit einer im Vergleich zur Beleuchtungsstärke größeren Beleuchtungsstärke aufgenommen;
- Bestimmen eines geeigneten Portraitbilds aus den weiteren Portraitbildern, welches den mehreren Prüfkriterien und dem Hintergrund-Prüfkriterium für das digitale biometrische Passbild genügt; und
- Erzeugen der Passbilddaten unter Verwendung von dem geeigneten Portraitbild zugeordneten Portraitbilddaten..

2. Verfahren nach mindestens einem der vorangehenden Ansprüche, **dadurch gekennzeichnet, dass** die mehreren Prüfkriterien für das digitale biometrische Passbild mindestens die Prüfkriterien nach der Foto-Mustertafel für Personaldokumente umfassen, ohne das Hintergrund-Prüfkriterium.

3. Verfahren nach mindestens einem der vorangehenden Ansprüche, **dadurch gekennzeichnet, dass** die mehreren Prüfkriterien für das digitale biometrische Passbild mindestens die Prüfkriterien nach ICAO-Standard für Passbilder umfassen, ohne das Hintergrund-Prüfkriterium.

4. Verfahren nach mindestens einem der vorangehenden Ansprüche, **dadurch gekennzeichnet, dass** das Bestimmen des geeigneten Portraitbilds Folgendes aufweist:
- Vorauswählen eines der weiteren Portraitbilder, wenn das eine der weiteren Portraitbilder den mehreren Prüfkriterien für das digitale biometrische Passbild genügt; und
- Ausführen einer Hintergrundkorrektur für das vorausgewählte Portraitbild unter Verwendung von aus den weiteren Portraitbildern bestimmter Bildinformation, umfassend:
- Bestimmen eines Vordergrunds und eines Hintergrund in dem vorausgewählte Portraitbild unter Verwendung der aus den weiteren Portraitbildern bestimmten Bildinformation; und
- Ausführen der Hintergrundkorrektur für den Hintergrund im vorausgewählten Portraitbild.

5. Verfahren nach Anspruch 4, **dadurch gekennzeichnet, dass** beim Bestimmen von Vordergrund und Hintergrund weiterhin Folgendes vorgesehen ist:
- Bestimmen eines Vergleichsbildes, bei dem Bildpunkte des Vergleichsbildes entweder einem Vordergrund oder einem Hintergrund zugeordnet werden, indem in einander zugeordneten Bildpunkten ein Bildpunktunterschied bestimmt und die Bildpunkte in Abhängigkeit von einem Schwellwert für den Bildpunktunterschied dem Vordergrund oder dem Hintergrund zugeordnet werden, wobei das Vergleichsbild unter Verwendung von wenigstens zwei der weiteren Portraitbilder bestimmt wird;
- Bestimmen von Vordergrund und Hintergrund für Bildpunkte im vorausgewählten Portraitbild und
- Herstellen eines dem Hintergrund-Prüfkriterium genügenden, korrigierten Hintergrunds für die dem Hintergrund zugeordneten Bildpunkte im vorausgewählten Portraitbild.

6. Verfahren nach Anspruch 5, **dadurch gekennzeichnet, dass** das Bestimmen des Bildpunktunterschieds ein Bestimmen eines Helligkeits- und / oder Farbunterschieds für die einander zugeordneten Bildpunkte und ein Verwenden eines Helligkeits- und / oder Farbunterschiedsschwellwert umfasst.

7. Verfahren nach Anspruch 5 oder 6, **dadurch gekennzeichnet, dass** beim Herstellen des korrigierten Hintergrunds weiterhin Folgendes vorgesehen ist: Ausbilden der Bildpunkte für den Hintergrund mit einer homogenen Farbgebung und / oder Blenden des Vordergrunds zum Hintergrund mittels Alpha-Blending.

8. Verfahren nach mindestens einem der vorangehenden Ansprüche, **dadurch gekennzeichnet, dass** beim Aufnehmen der Folge von Portraitbildern und der weiteren Portraitbildern für die Person (4) mittels der Beleuchtungseinrichtung (7) eine getaktete Beleuchtung angewendet wird, wobei eine Taktung zur Bildwiederholfrequenz synchronisiert ist.

9. Verfahren nach mindestens einem der vorangehenden Ansprüche, **dadurch gekennzeichnet, dass** die Passbilddaten an eine Personalisierungseinrichtung (8) übertragen werden, die eingerichtet ist, die Passbilddaten zu verarbeiten, derart, dass eine Repräsentation des digitalen biometrischen Passbildes auf einem Dokumentenkörper für ein Sicherheitsdokument aufgebracht wird.

10. Verfahren zum Personalisieren eines Sicherheitsdokuments, mit:
- Bestimmen von Passbilddaten, die ein digitales biometrisches Passbild repräsentieren, gemäß einem Verfahren nach mindestens einem der vorangehenden Ansprüche;
- Bereitstellen der Passbilddaten in einer Personalisierungseinrichtung (8);
- Bereitstellen eines Sicherheitsdokuments (1); und
- Personalisieren des Sicherheitsdokuments (1), wobei bei hierbei die Passbilddaten in der Personalisierungseinrichtung (8) verarbeitet werden und eine Repräsentation des digitalen biometrischen Passbildes auf dem Sicherheitsdokument (1) aufgebracht wird.

11. Verfahren nach Anspruch 10, **dadurch gekennzeichnet, dass** beim Aufbringen der Repräsentation des digitalen biometrischen Passbildes auf das Sicherheitsdokument (1) ein biometrisches Passbild aufgedruckt wird und / oder die Passbilddaten in einem elektronischen Speicherelement (9) des Sicherheitsdokuments (1) gespeichert werden.

12. Vorrichtung zum Bestimmen von Passbilddaten, die ein digitales biometrisches Passbild für ein Sicherheitsdokument (1) repräsentieren, mit einer Passbildaufnahmeeinrichtung (3), die für Folgendes eingerichtet ist:
- Aufnehmen einer Folge von Portraitbildern für eine Person (4) mittels Videobildaufnahme mit einer Bildwiederholfrequenz mittels einer Videobildaufnahmevorrichtung (2), wobei die Person (4) hierbei mittels einer Beleuchtungseinrichtung (7) beleuchtet wird;
- Speichern von jeweiligen Portraitbilddaten für die Portraitbilder aus der Videobildaufnahme und
- Bestimmen von Passbilddaten, die ein digitales biometrisches Passbild der Person (4) repräsentieren, aufweisend:
- Bestimmen eines ersten Portraitbilds aus der Folge von Portraitbildern, welches gemäß Aufnahmebedingungen aufgenommen wurde und mehreren Prüfkriterien für ein digitales biometrisches Passbild für ein Sicherheitsdokument (1) genügt, nicht aber hinsichtlich eines Hintergrund-Prüfkriteriums für das digitale biometrische Passbild;
- Bestimmen einer Beleuchtungseigenschaft, welche mittels der Beleuchtungseinrichtung (7) beim Aufnehmen des ersten Portraitbilds angewendet wurde und mindestens eine Beleuchtungsstärke anzeigt;
- Aufnehmen von weiteren Portraitbildern für die Person (4) mittels Videobildaufnahme mit Hilfe der Videobildaufnahmevorrichtung (2) sowie unter Verwendung der Beleuchtungseinrichtung (7) und Aufrechterhaltung der Aufnahmebedingungen, wobei die weiteren Portraitbilder
- ein erstes weiteres Portraitbild, welches unter Verwendung der Beleuchtungsstärke aufgenommen wird,
- ein zweites weiteres Portraitbild umfassen, welches unter Verwendung einer im Vergleich zur Beleuchtungsstärke geringeren Beleuchtungsstärke aufgenommen wird; und
- ein drittes weiteres Portraitbild wird mit einer im Vergleich zur Beleuchtungsstärke größeren Beleuchtungsstärke aufgenommen;
- Bestimmen eines geeigneten Portraitbilds aus den weiteren Portraitbildern, welches den mehreren Prüfkriterien und dem Hintergrund-Prüfkriterium für das digitale biometrische Passbild genügt; und
- Erzeugen der Passbilddaten unter Verwendung von dem geeigneten Portraitbild zugeordneten Portraitbilddaten.

## Claims

1. A method for determining passport image data representing a digital biometric passport image for a security document (1), comprising:
- recording a sequence of portrait images for a person (4) by means of video image recording at a frame repetition rate by means of a video image recording device (2), wherein the person (4) is illuminated by means of an illumination device (7);
- storing respective portrait image data for the portrait images from the video image recording; and
- determining passport image data representing a digital biometric passport image of the person (4), comprising:
- determining a first portrait image from the sequence of portrait images, which was recorded according to recording conditions and satisfies a plurality of test criteria for a digital biometric passport image for a security document (1), but not with respect to a background test criterion for the digital biometric passport image;
- determining an illumination property, which was applied by means of the illumination device (7) when recording the first portrait image and indicates at least one illumination intensity;
- recording further portrait images for the person (4) by means of video image recording with the aid of the video image recording device (2) and using the illumination device (7), and maintaining the recording conditions, wherein the further portrait images
- comprise a first further portrait image, which is recorded using the illumination intensity,
- comprise a second further portrait image, which is recorded using an illumination intensity which is lower in comparison with the illumination intensity; and
- a third further portrait image is recorded with an illumination intensity which is higher in comparison with the illumination intensity;
- determining a suitable portrait image from the further portrait images, which satisfies the plurality of test criteria and the background test criterion for the digital biometric passport image; and
- generating the passport image data using portrait image data associated with the suitable portrait image.

2. The method according to at least one of the preceding claims, **characterized in that** the plurality of test criteria for the digital biometric passport image comprise at least the test criteria according to the photo pattern chart for personal documents, without the background test criterion.

3. The method according to at least one of the preceding claims, **characterized in that** the plurality of test criteria for the digital biometric passport image comprise at least the test criteria according to the ICAO standard for passport images, without the background test criterion.

4. The method according to at least one of the preceding claims, **characterized in that** determining the suitable portrait image comprises:
- pre-selecting one of the further portrait images, if the one of the further portrait images satisfies the plurality of test criteria for the digital biometric passport image; and
- performing a background correction for the pre-selected portrait image using image information determined from the further portrait images, comprising:
- determining a foreground and a background in the pre-selected portrait image using the image information determined from the further portrait images; and
- performing the background correction for the background in the pre-selected portrait image.

5. The method according to claim 4, **characterized in that** the following is further provided when determining foreground and background:
- determining a comparison image, in which pixels of the comparison image are associated with either a foreground or a background by determining a pixel difference in pixels associated with one another and the pixels are associated with the foreground or the background depending on a threshold value for the pixel difference, wherein the comparison image is determined using at least two of the further portrait images;
- determining foreground and background for pixels in the pre-selected portrait image;
and
- producing a corrected background satisfying the background test criterion for the pixels associated with the background in the pre-selected portrait image.

6. The method according to claim 5, **characterized in that** determining the pixel difference comprises determining a brightness and/or color difference for the pixels associated with one another and using a brightness and/or color difference threshold value.

7. The method according to claim 5 or 6, **characterized in that** the following is further provided when producing the corrected background: forming the pixels for the background with a homogeneous coloration and/or blending the foreground to the background by means of alpha blending.

8. The method according to at least one of the preceding claims, **characterized in that** clocked illumination is applied when recording the sequence of portrait images and the further portrait images for the person (4) by means of the illumination device (7), wherein clocking is synchronized with the frame repetition rate.

9. The method according to at least one of the preceding claims, **characterized in that** the passport image data are transmitted to a personalization device (8) which is configured to process the passport image data such that a representation of the digital biometric passport image is applied to a document body for a security document.

10. A method for personalizing a security document, comprising:
- determining passport image data representing a digital biometric passport image according to a method according to at least one of the preceding claims;
- providing the passport image data in a personalization device (8);
- providing a security document (1); and
- personalizing the security document (1), wherein the passport image data are processed in the personalization device (8) and a representation of the digital biometric passport image is applied to the security document (1).

11. The method according to claim 10, **characterized in that** a biometric passport image is printed on the security document (1) when applying the representation of the digital biometric passport image and/or the passport image data are stored in an electronic memory element (9) of the security document (1).

12. An apparatus for determining passport image data representing a digital biometric passport image for a security document (1), comprising a passport image capturing device (3), configured for:
- recording a sequence of portrait images for a person (4) by means of video image recording at a frame repetition rate by means of a video image recording device (2), wherein the person (4) is illuminated by means of an illumination device (7);
- storing respective portrait image data for the portrait images from the video image recording; and
- determining passport image data representing a digital biometric passport image of the person (4), comprising:
- determining a first portrait image from the sequence of portrait images, which was recorded according to recording conditions and satisfies a plurality of test criteria for a digital biometric passport image for a security document (1), but not with respect to a background test criterion for the digital biometric passport image;
- determining an illumination property, which was applied by means of the illumination device (7) when recording the first portrait image and indicates at least one illumination intensity;
- recording further portrait images for the person (4) by means of video image recording with the aid of the video image recording device (2) and using the illumination device (7), and maintaining the recording conditions, wherein the further portrait images
- comprise a first further portrait image, which is recorded using the illumination intensity,
- comprise a second further portrait image, which is recorded using an illumination intensity which is lower in comparison with the illumination intensity; and
- a third further portrait image is recorded with an illumination intensity which is higher in comparison with the illumination intensity;
- determining a suitable portrait image from the further portrait images, which satisfies the plurality of test criteria and the background test criterion for the digital biometric passport image; and
- generating the passport image data using portrait image data associated with the suitable portrait image.

## Revendications

1. Procédé de détermination de données de photo d'identité, qui représentent une photo d'identité biométrique numérique pour un document de sécurité (1), comprenant :
- la capture d'une séquence de portraits d'une personne (4) par enregistrement vidéo à un taux de rafraichissement d'image donné, au moyen d'un dispositif d'enregistrement vidéo (2), dans lequel la personne (4) est éclairée par un dispositif d'éclairage (7) ;
- le stockage des données de portraits pour les portraits issus de l'enregistrement vidéo ; et
- la détermination de données de photo d'identité, qui représentent une photo d'identité biométrique numérique de la personne (4), comprenant :
- la détermination d'un premier portrait parmi la séquence de portraits, qui a été capturé selon les conditions d'enregistrement et satisfaisant à plusieurs critères de test pour une photo d'identité biométrique numérique pour un document de sécurité (1) mais non à un critère de test d'arrière-plan pour la photo d'identité biométrique numérique ;
- la détermination d'une caractéristique d'éclairage, qui a été appliquée au moyen du dispositif d'éclairage (7) lors de la capture du premier portrait et indique au moins une intensité d'éclairage ;
- la capture d'autres portraits de la personne (4) par enregistrement vidéo au moyen du dispositif d'enregistrement vidéo (2) et du dispositif d'éclairage (7) et le maintien des conditions d'enregistrement, dans lequel les autres portraits
- comprennent un premier autre portrait, qui est capturé avec l'intensité d'éclairage,
- comprennent un deuxième autre portrait, qui est capturé avec une intensité d'éclairage inférieure à l'intensité d'éclairage ; et
- un troisième autre portrait est capturé avec une intensité d'éclairage supérieure à l'intensité d'éclairage ;
- la détermination, parmi les autres portraits, d'un portrait approprié satisfaisant aux critères de test et au critère de test d'arrière-plan pour la photo d'identité biométrique numérique ; et
- la génération des données de photo d'identité en utilisant les données de photo d'identité attribuées à la photo correspondante.

2. Procédé selon au moins une des revendications précédentes, **caractérisé en ce que** les critères de test multiples pour la photo d'identité biométrique numérique comprennent au moins les critères de test du tableau d'échantillons de photos pour documents personnels, à l'exclusion du critère de test d'arrière-plan.

3. Procédé selon au moins une des revendications précédentes, **caractérisé en ce que** les critères de test multiples pour la photo d'identité biométrique numérique comprennent au moins les critères de test selon la norme ICAO pour les photos d'identité, à l'exclusion du critère de test d'arrière-plan.

4. Procédé selon au moins une des revendications précédentes, **caractérisé en ce que** la détermination du portrait approprié comprend les étapes suivantes :
- la présélection d'un des portraits supplémentaires, si celui-ci satisfait aux critères de test multiples pour la photo d'identité biométrique numérique ; et
- l'exécution d'une correction d'arrière-plan pour le portrait présélectionné en utilisant des informations d'image déterminées à partir des portraits supplémentaires, comprenant :
- la détermination d'un premier plan et un arrière-plan dans le portrait présélectionné en utilisant les informations d'image déterminées à partir des portraits supplémentaires ; et
- l'exécution de la correction d'arrière-plan pour l'arrière-plan dans le portrait présélectionné.

5. Procédé selon la revendication 4, **caractérisé en ce que**, lors de la détermination du premier plan et de l'arrière-plan, les opérations suivantes sont également prévues :
- la détermination d'une image de comparaison, dans laquelle les pixels de l'image de comparaison sont affectés soit à un premier plan, soit à un arrière-plan, en déterminant une différence de pixels entre les pixels associés et en affectant les pixels au premier plan ou à l'arrière-plan en fonction d'une valeur seuil de différence de pixels, dans lequel l'image de comparaison est déterminée au moyen d'au moins deux des autres portraits ;
- la détermination du premier plan et de l'arrière-plan des pixels dans le portrait présélectionné et
- la création d'un arrière-plan corrigé satisfaisant au critère de test d'arrière-plan pour les pixels affectés à l'arrière-plan dans le portrait présélectionné.

6. Procédé selon la revendication 5, **caractérisé en ce que** la détermination de la différence de pixels comprend la détermination d'une différence de luminosité et/ou de couleur pour les pixels associés et l'utilisation d'une valeur seuil de différence de luminosité et/ou de couleur.

7. Procédé selon la revendication 5 ou 6, **caractérisé en ce que**, lors de la production de l'arrière-plan corrigé, les opérations suivantes sont également prévues : la formation des pixels de l'arrière-plan avec une couleur homogène et/ou le mélange du premier plan et de l'arrière-plan par fusion alpha.

8. Procédé selon au moins une des revendications précédentes, **caractérisé en ce que**, lors de l'enregistrement de la séquence de portraits et des autres portraits de la personne (4) au moyen du dispositif d'éclairage (7), un éclairage cadencé est appliqué, dans lequel une cadence est synchronisée avec le taux de rafraîchissement d'image.

9. Procédé selon au moins une des revendications précédentes, **caractérisé en ce que** les données de photo d'identité sont transmises à un dispositif de personnalisation (8), qui est configuré pour traiter les données de photo d'identité de manière à appliquer une représentation de la photo d'identité biométrique numérique au corps de document d'un document de sécurité.

10. Procédé de personnalisation d'un document de sécurité, comprenant :
- la détermination des données de photo d'identité, qui représentent une photo d'identité biométrique numérique, selon un procédé selon au moins une des revendications précédentes ;
- la fourniture des données de photo d'identité dans un dispositif de personnalisation (8) ;
- la fourniture d'un document de sécurité (1) ; et
- la personnalisation du document de sécurité (1), dans lequel les données de photo d'identité sont traitées dans le dispositif de personnalisation (8) et une représentation de la photo d'identité biométrique numérique est appliquée au document de sécurité (1).

11. Procédé selon la revendication 10, **caractérisé en ce que**, lors de l'application de la représentation de la photo d'identité biométrique numérique au document de sécurité (1), une photo d'identité biométrique est imprimée et/ou les données de la photo d'identité sont stockées dans un élément de stockage électronique (9) du document de sécurité (1).

12. Dispositif de détermination de données photographiques d'identité représentant une photo d'identité biométrique numérique pour un document de sécurité (1), comprenant un dispositif d'enregistrement de photos d'identité (3), configuré pour les opérations suivantes :
- la capture d'une séquence de portraits d'une personne (4) par enregistrement vidéo à un taux de rafraichissement d'image donné, au moyen d'un dispositif d'enregistrement vidéo (2), dans lequel la personne (4) est éclairée par un dispositif d'éclairage (7) ;
- le stockage des données de portraits pour les portraits issus de l'enregistrement vidéo ; et
- la détermination de données de photo d'identité, qui représentent une photo d'identité biométrique numérique de la personne (4), comprenant :
- la détermination d'un premier portrait parmi la séquence de portraits, qui a été capturé selon les conditions d'enregistrement et satisfaisant à plusieurs critères de test pour une photo d'identité biométrique numérique pour un document de sécurité (1) mais non à un critère de test d'arrière-plan pour la photo d'identité biométrique numérique ;
- la détermination d'une caractéristique d'éclairage, qui a été appliquée au moyen du dispositif d'éclairage (7) lors de la capture du premier portrait et indique au moins une intensité d'éclairage ;
- la capture d'autres portraits de la personne (4) par enregistrement vidéo au moyen du dispositif d'enregistrement vidéo (2) et du dispositif d'éclairage (7) et le maintien des conditions d'enregistrement, dans lequel les autres portraits
- comprennent un premier autre portrait, qui est capturé avec l'intensité d'éclairage,
- comprennent un deuxième autre portrait, qui est capturé avec une intensité d'éclairage inférieure à l'intensité d'éclairage ; et
- un troisième autre portrait est capturé avec une intensité d'éclairage supérieure à l'intensité d'éclairage ;
- la détermination, parmi les autres portraits, d'un portrait approprié satisfaisant aux critères de test et au critère de test d'arrière-plan pour la photo d'identité biométrique numérique ; et
- la génération des données de photo d'identité en utilisant les données de photo d'identité attribuées à la photo correspondante.
